# EUROPEAN PATENT APPLICATION

(11) **EP 0 629 639 A1**
(43) Date of publication of application: **21.12.1994**
(21) Application number: 94109206.6
(22) Date of filing: 15.06.1994
(51) Int. Cl.: C08F 220/18, C08F 220/58, C09J 133/06

(54) **Self-crosslinking solvent borne pressure sensitive adhesives**

(30) Priority: 17.06.1993 US 79022; 12.05.1994 US 241822
(71) Applicant: National Starch and Chemical Investment Holding Corporation, Wilmington, Delaware 19809 (US)
(72) Inventor: Leighton, John c., Flanders, New Jersey 07836 (US); Mudge, Paul R., Belle Mead, New Jersey 08502 (US); Wanigatunga, Sirisoma, Bridgewater, New Jersey 08807 (US); Ramharack, Roopram, Montgomery, New Jersey 08502 (US); Chandran, Rama, South Bound Brook, New Jersey 08880 (US)
(74) Representative: Hagemann, Heinrich, Dr.rer.nat., Dipl.-Chem.

(57) **Abstract**

A pressure sensitive adhesive composition prepared from an organic solvent solution of an interpolymer, the interpolymer containing:
i) at least about 80% by weight of at least one alkyl ester of acrylic or methacrylic acid containing 2 to 18 carbon atoms in the alkyl group; or a vinyl ester of an C₂-C₁₀ alkanoic acid or combination thereof;
ii) 1 to 20% by weight of an ethylenically unsaturated monomer of the general formula: 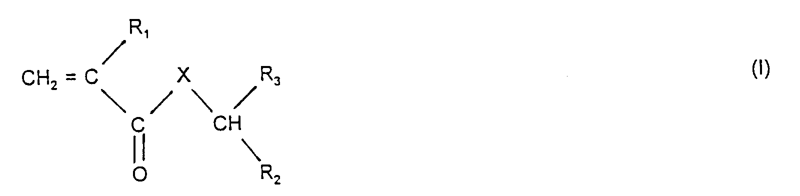 where R₁ is H or CH₃ with the proviso that (a) when X is NH and R₂ is H, R₃ is 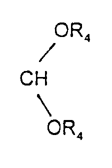 or O-R₅ ;
   (b) when X is NH and R₂ is OH; R₃ is 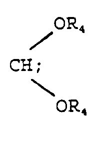 and
   (c) when X is O, R₂ is H and R₃ is 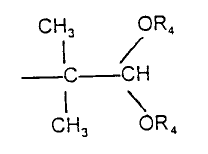 where in (a), (b) and (c), R₄ is C₁-C₄ alkyl or (CH₂)ₙ and n is 2-4 and R₅ is H or C₁-C₄ alkyl; and
iii) 0 to 10% by weight of a hydroxyl containing monomer.

## Description

Pressure sensitive adhesives, which are normally tacky materials adherent upon application of light pressure, are desirable in a number of industrial applications because they are applicable to many substrates and are easily adapted to production line techniques. In order to function satisfactorily as a pressure sensitive adhesive (PSA), a composition must provide a balance of properties including good tack, adhesive strength and cohesive strength. The pressure sensitive adhesive must adhere instantaneously when applied to substrates of differing surface characteristics. Further, for many industrial applications, the bond obtained by the use of the adhesive must have sufficient strength to remain firm over relatively long periods and under different and sometimes severe environmental conditions.

We have now found that the cohesive properties of the adhesive will be maintained, even at elevated temperatures, without significant decrease in peel adhesion, by the incorporation in the pressure sensitive adhesive polymer of 6 to 20% by weight of an ethylenically unsaturated N-substituted amides or esters of the general formula: 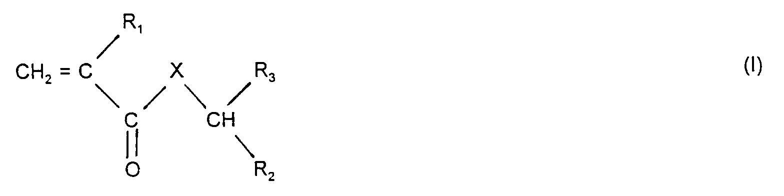
where R₁ is H or CH₃; with the proviso that (a) when X is NH and R₂ is H, R₃ is 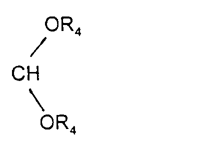
or O-R₅ ;
(b) when X is NH and R₂ is OH; R₃ is 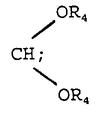
and
(c) when X is O, R₂ is H and R₃ is 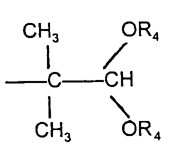
where in (a), (b) and (c), R₄ is C₁-C₄ alkyl or (CH₂)ₙ and n is 2-4 and R₅ is H or C₁-C₄ alkyl.

Preferably, hydroxyl-containing monomers may also be employed as to impart functionality that is coreactive with the acetal or acetal/hydroxyl groups of the above monomers. Typical hydroxyl-containing comonomers are hydroxypropyl (meth)acrylate and hydroxyethyl (meth)acrylate.

The monomers described herein may be used to improve the cohesive strength of virtually any pressure sensitive adhesive system containing ethylenically unsaturated functionality. Thus, the monomers may be interpolymerized into any conventional vinyl ester, acrylic or mixed vinyl ester acrylic polymer provided the polymer has a Tg in the range of -5°C to 60°C, preferably in the range of -40°C to 60°C in order to maintain adequate pressure sensitive properties.

Suitable pressure sensitive adhesive polymers for use herein include vinyl (C₃ to C₁₀) ester polymers, as well as polymers of vinyl acetate with alkyl esters of acrylic or methacrylic acid wherein said alkyl groups contain from 1 to 18 carbon atoms; copolymers of vinylidene chloride with alkyl esters of acrylic or methacrylic acid wherein said alkyl groups contain from 1 to 8 carbon atoms; and homopolymers of alkyl esters of acrylic or methacrylic acid wherein said alkyl groups contain from 1 to 8 carbon atoms, the resulting polymer having a Tg in the required range. In general, the pressure sensitive polymers of the invention will comprise 80 to 90% of monomers chosen from the above list of vinyl esters and/or acrylics.

Thus, the pressure sensitive adhesives of the present invention are prepared from a substantially water-free, organic solvent solution of an interpolymer, the interpolymer comprising:
i) at least about 80% by weight of at least one alkyl ester of acrylic or methacrylic acid containing 2 to 18 carbon atoms in the alkyl group; or a vinyl ester of an C₂-C₁₀ alkanoic acid or combination thereof;
ii) 1 to 20% by weight of an ethylenically unsaturated N-substituted amide of the general formula: 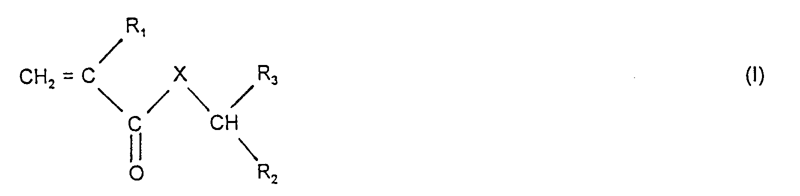 where R₁ is H or CH₃ with the proviso that (a) when X is NH and R₂ is H, R₃ is 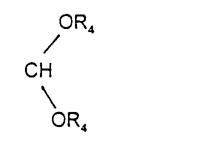 or O-R₅ ;
   (b) when X is NH and R₂ is OH; R₃ is 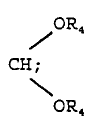 and
   (c) when X is O, R₂ is H and R₃ is 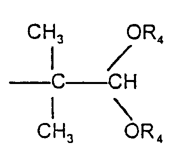 where in (a), (b) and (c), R₄ is C₁-C₄ alkyl or (CH₂)ₙ and n is 2-4 and R₅ is H or C₁-C₄ alkyl; and
iii) 0 to 10% by weight of a hydroxyl containing monomer.

More specifically, if the alkyl acrylates are used to produce the pressure sensitive polymer, they are preferably acrylic acid esters of alcohols having up to about 18 carbon atoms. The preferred alkyl acrylates have an average of from about 4 to about 10 carbon atoms in the alkyl groups, and include butyl acrylate, amyl acrylate, hexyl acrylate, heptyl acrylate, octyl acrylate, nonyl acrylate, decyl acrylate, and various isomers of these acrylates. One specific preferred alkyl acrylate for use in the invention is 2-ethylhexyl acrylate. Higher alkyl acrylates can in some instances be used, particularly in combination with the lower alkyl acrylates, whereby the average number of carbon atoms in the alkyl groups is within the desired range.

The interpolymer may further comprise copolymerizable acrylic monomers other than alkyl esters of acrylic or methacrylic acid. Suitable acrylic monomers for use herein are the ethylenically unsaturated carboxylic acids: preferred acids are acrylic acid, and methacrylic acid, but other copolymerizable acids such as maleic acid, crotonic acid, itaconic acid, and fumaric acid can also be employed.

In the case of polymers based on vinyl esters, suitable are vinyl esters of saturated carboxylic acids, such as vinyl acetate, vinyl propionate or vinyl butyrate.

While any monomers meeting the general formula (I) may be used herein, we have found that the N-(2,2-dialkoxy-1-hydroxy) alkyl acrylamides having 1 to 4 carbon atoms in the alkoxy group and especially, N-(2,2-dimethoxy-1-hydroxy) ethyl acrylamide [DMHEA], are the most commercially viable. Also commercially available and falling within the scope of the invention are N-butoxymethyl acrylamide and (3,3-dimethoxy-2,2-dimethyl) propyl acrylate.

As noted above, it is preferred that the polymer contain about 0.5 to 10% of a hydroxyl containing monomer which will react with the ethylenically unsaturated monomers of formula (I). Preferred are hydroxy alkyl esters, esters of acrylic acid, methacrylic acid, and other alpha-beta ethylenically unsaturated carboxylic acids. Examples include 3-hydroxyethyl acrylate, 2-hydroxypropyl acrylate, 3-hydroxypropyl acrylate, 4-hydroxybutyl acrylate, 3-hydroxyethyl methacrylate, 2-hydroxypropyl methacrylate, 3-hydroxypropyl methacrylate, 4-hydroxybutyl methacrylate, and corresponding esters of other unsaturated acids. For example, ethacrylic acid, crotonic acid, and similar acids of up to about 6 carbon atoms. There may also be employed mono- or di-esters of unsaturated dicarboxylic acids such as maleic acid, fumaric acids, and itaconic acid in which at least one of the esterifying groups contains a hydroxyl group. Examples of such esters include: mono(2-hydroxyethyl)maleate mono(2-hydroxyethyl)fumarate, bis(2-hydroxyethyl)maleate mono(2-hydroxypropyl)-maleate, bis(2-hydroxypropyl)maleate, mono(2-hydroxypropyl)itaconate, bis(2-hydroxyethyl)itaconate and 2-hydroxyethylbutyl maleate.

The polymer may also include small amounts of other polymerizable monomers containing reactive hydrogen atoms such as ethylenically unsaturated carboxylic acids, and amines formed, for example, by the reaction of propylene imine and a carboxyl-containing polymer. They can also be utilized with half esters of unsaturated dicarboxylic acids such as methyl hydrogen fumarate, butyl hydrogen fumarate, ethyl hydrogen maleate, and butyl hydrogen maleate. From 0.2 percent up to 20 percent by weight of the total weight of the interpolymer can be provided by the interpolymerized acids with the preferred products containing from 0.3 to 10 percent by weight of such acids. These hydrogen containing monomers, if present, are used in an amount within the range of from 0.2 percent to 20 percent by weight of the total weight of the interpolymer.

It will be recognized that the combination of monomers used to make up the interpolymer will be such as to provide a normally tacky pressure sensitive material, i.e., such that the Tg of the resulting polymer will be in the range of -5°C to -60°C, preferably -40°C to -60°C. Thus, within the skill of the art, the interpolymer can include essentially any ethylenic monomer or mixture of monomers copolymerizable with the other components and which do not contain additional reactive functional groups and which do not, in combination with those components, provide unsatisfactory properties such as unsatisfactorily reduced tack. Such other monomers can be of widely varying types, depending upon the specific alkyl acrylates, hydroxyalkyl esters, carboxylic acids, and other monomers in the interpolymer. For instance, there can be utilized in certain cases monoolefinic hydrocarbons, such as styrene and vinyl toluene; halogenated monoolefinic hydrocarbons, such as vinyl chloride and vinylidiene chloride; unsaturated esters, such as isopropenyl acetate and dimethyl maleate; and dienes, such as 1,3-butadiene.

The unique advantage to the incorporating the monomers of formula (I) into the pressure sensitive polymer is that it provides a covalently crosslinkable mechanism whereby the cohesive strength of the polymer is substantially improved with little or no reduction in adhesive strength.

In addition to the advantages achieved via the covalent crosslinking of the invention, in the case of polymers prepared containing reactive hydrogen monomers, the polymers may also be further crosslinked by crosslinking agents such as metal alkoxides or chelating metal esters via conventional ionic or covalent crosslinking mechanisms of the prior art.

Any metal alkoxide such as those having the formula RₙT(OR₁)_{z}, wherein T is a metal selected from the group consisting of Groups II, III, IV and V of the Periodic Table; R is selected from the group consisting of alkyl radicals of from 1 to 8 carbon atoms such as methyl, ethyl, butyl, iso-octyl and the like and aryl radicals of from 6 to 16 carbon atoms such as benzyl. R₁ is selected from the group consisting of aliphatic and substituted aliphatic radicals containing from 1 to 18 carbon atoms, such as alkyl groups, allyl groups and the like; n is an integer whose value is zero or greater and z is an integer of at least 2, wherein the sum of n+z is greater than one (1) and is equal to the valence of the metal represented by T.

The preferred metal alkoxides are aluminum isopropoxide or titanium esters such as alkyl titanates including the ortho titanic acid esters of monofunctional alcohols and tetraaryl esters. Examples of alkyl titanates include tetramethyl titanate, tetraethyl titanate, tetrapropyl titanate, tetraisopropyl titanate, tetrabutyl titanate, tetra-2-ethyl-hexyl titanate, and tetrastearyl titanate. As indicated, tetraphenyl titanate and other tetraaryl esters are also included.

The preferred chelated esters employed are those which are commercially available, which include those formed from octylene glycol, triethanolamine, 2,-4-pentanedione, and lactic acid.

The polymers used herein are prepared by organic solvent polymerization techniques involving in some cases delayed addition of monomer when there is a great disparity between reactivity ratios as for example between the reactivity ratios of vinyl acetate and acrylate monomers. The time interval for the delayed addition may range from about 60 to 600 minutes and longer. The techniques in general, involve the polymerization of the respective monomer mixtures in suitable organic solvents, the polymerization being initiated by heat activated free radical initiators.

The choice of solvents for the interpolymer used in the practice of this invention is governed by the solubility requirements of the monomers and the resulting interpolymers in that both the monomers and the resulting interpolymers should be soluble in the selected solvent or mixtures of solvents.

Examples of suitable solvents for the interpolymers include aromatic solvents such as toluene, xylene, etc. Suitable aliphatic solvents include esters such as ethyl acetate, propyl acetate, isopropyl acetate, butyl acetate, etc.; ketones such as methyl ethyl ketone, acetone, etc.; aliphatic hydrocarbons such as heptane, hexane, pentane, etc. Especially useful are mixtures of the foregoing.

Suitable polymerization initiators include organic peroxides, such as tert-butyl hydroperoxide, di-tert-butylperoxide, cumene hydroperoxide, di-cumyl peroxide, benzoyl peroxide and the like. Equally suitable are organic peroxygen compounds such as tert-butyl peracetate, tert-butyl perbenzoate, di-tert-butyl perphthalate; other initiators would include 2,2'-azodiisobutyronitrile, ultraviolet light, gamma radiation, etc.

The polymer systems of this invention may also be prepared in mass or non-aqueous dispersion type polymerization processes as are well known to those skilled in the art. However, solution polymerization processes are preferred.

The adhesive composition is essentially composed of the adhesive polymer, described above, in an organic solvent. The solvent may, but need not necessarily be, the same solvent used in the polymerization. In order to provide maximum storage stability, it is important that the solvent contain a substantial proportion, e.g., at least about 20 percent by weight, of an alcohol. Any liquid alcohol or suitable volatility can be employed, although lower alkanols, such as ethanol, propanol, isopropanol and butanol, are preferred. Other alcohol solvents that can be utilized include methyl Cellosolve, butyl Cellosolve, diacetone alcohol, and the like. The remainder of the solvent can be any of the organic materials ordinarily utilized for this purpose and in which the interpolymer is soluble or dispersible, including esters, ketones, hydrocarbons, etc. The preferred solvents are aliphatic hydrocarbon solvents, such as heptane, as they permit the coating of the adhesive directly onto solvent sensitive backings with facility and they dry quickly. It is also preferable that as little water as possible be present.

There can also be included in the adhesive composition additive materials which do not affect the basic properties of the adhesive. Fillers, tackifiers, antioxidants, stabilizers, and the like are thus sometimes added to the formulated adhesive.

The covalent crosslinking mechanism is triggered by blending the adhesive polymer with an organic soluble Lewis acid or Bronsted acid catalyst prior to application of the adhesive to the substrate. Suitable acid catalysts include methane sulfonic and p-toluene sulfonic acid, malic acid, maleic acid, zinc chloride, etc. Para-toluene sulfonic acid is preferred. Alternatively crosslinking can be achieved by the use of irradiation in conjunction with catalysts such as diphenyl iodonium iodide.

The adhesive can be employed in various forms. For instance, it can be cast as a free film interleaved between sheets of release paper and employed in a transfer operation. In other methods of utilization, the adhesive is coated onto a backing member and dried to provide pressure sensitive adhesive coated materials, such as tapes, sheets or panels. Alternatively, the adhesive may be coated on to a release material and then dried and transferred to a backing member. Cellophane, vinyls, cloth, Mylar, rubber, various laminates, and other such flexible materials, as well as wood, metal, hardboard and other less flexible backings, can be coated in this matter. The adhesives of this invention may also be used for decorative coatings, outdoor decals, and signs. In some cases, the adhesive can be used as a liquid adhesive and applied just prior to use.

In any event, the dried adhesive composition forms a tacky adhesive which adheres to various substrates to provide a bond of high cohesive strength, thus, making these adhesives especially desirable in uses where holding ability and retention of strength over a period of time are necessary.

### EXAMPLE 1

### Preparation of PSA Polymer by Solution Polymerization

This example describes the preparation of three acrylic solution polymers (A, B and C) of a pressure sensitive adhesive containing octyl acrylate(2-ethylhexyl acrylate), methyl acrylate, acrylic acid, hydroxyethyl acrylate (HEA), and dimethoxy hydroxy ethyl acrylamide (DMHEA).

### A. Solution Polymer

### 1. Equipment

A one liter, four neck round bottom flask equipped with a stainless steel stirrer, condenser, and a thermometer was used for polymerization means for heating (hot water bath) and cooling were provided.

### 2. Material Charges

| | **GRAMS** | | |
|---|---|---|---|
| | **A** | **B** | **C** |
| **MONOMER MIX** | | | |
| Octyl Acrylate | 130.0 | 130.0 | 130.0 |
| Methyl Acrylate | 55.0 | 55.0 | 55.0 |
| Acrylic Acid | 15.0 | 15.0 | 15.0 |
| DMHEA (93.0%) | 0 | 10.8 | 10.8 |
| HEA | 0 | 0 | 6.6 |

| **INITIAL CHARGE** | | | |
|---|---|---|---|
| Monomer Mix | 20.0 | 20.0 | 20.0 |
| Vazo 64 | 0.1 | 0.1 | 0.1 |
| Acetone | 14.0 | 14.0 | 14.0 |
| Ethyl Acetate | 32.0 | 32.0 | 32.0 |

| **SLOW ADDITION 1** | | | |
|---|---|---|---|
| Monomer Mix | 180.0 | 190.8 | 197.4 |

| **SLOW ADDITION 2** | | | |
|---|---|---|---|
| Acetone | 21.8 | 21.8 | 21.8 |
| Ethyl Acetate | 119.6 | 119.6 | 119.6 |
| Vazo 64* | 1.0 | 1.0 | 1.0 |

| **SLOW ADDITION 3** | | | |
|---|---|---|---|
| Ethyl Acetate | 50.0 | 50.0 | 50.0 |
| t-amyl peroxypivilate (50.0%) | 2.0 | 2.0 | 2.0 |

| **DILUTION** | | | |
|---|---|---|---|
| Isopropanol | 70.0 | 70.0 | 70.0 |
| Ethyl Acetate | 48.0 | 48.0 | 48.0 |

| | | | |
|---|---|---|---|
| * Vazo 64 is azoisobutyronitrile from DuPont | | | |

### 3. Procedure

The monomer mix was prepared first. The initial charge to the reactor, and it was heated to reflux (68.5°C). After refluxing for 10 minutes, the first slow addition was started over three hours, and slow addition 2 was started over four hours. When the second slow addition was complete, the contents of the flask were held at reflux for two hours. Then the third slow addition was started over one hour. When it was completed, the contents were held under reflux for two hours. The contents were then cooled to 60°C and the diluent added.

The resulting lacquers have the following properties:

| | **A** | **B** | **C** |
|---|---|---|---|
| **Percent Solids** | 36.5 | 37.5 | 37.8 |
| **Intrinsic Viscosity** | 0.538 | 0.471 | 0.449 |
| **Brookfield Viscosity** | 750.0 | 1330.0 | 1935.0 |

### 4. Testing

Samples were formulated with 0.02 pph (parts per hundred) maleic acid to give acetal only crosslinking (MA), with Al(acac)₃ to give aluminum only crosslinking (A1) and with both maleic acid and Al(acac)₃ to give both acetal and aluminum crosslinking (MA + A1). The maleic acid was used as a solid while the aluminum acetyl acetonate was used as a 7.92% solution in toluene. In all cases the weights were based on 100 parts of the polymer solution.

The samples were then subjected to the following tests:
1) Shear Strength: Films of the adhesives being evaluated are applied to a polyethylene terephthalate film backing in a 1 mil dry thickness. The test samples which are approximately 1 inch in width and 3 inches in length, are securely adhered by thumb pressure to a polished chrome-steel bar which is ½ inch in width so that the sample makes a 178° angle with the vertical and the dimensions of the area adhered to, in each instance, being ½ x 1 inches. After a 15 minute wetting out period, a weight is secured to the sample and the time required for the film to separate or delaminate from the bar is recorded as the shear hold time. The samples were tested at the temperatures and particular weights indicative in the tables below.
2) Peel Test: This standard adhesion test, as described in PSTC-1, serves to measure the interfacial adhesive strength of the adhesive compositions of this invention. The test samples are prepared in the manner described in the shear Hold Test except that the 1 x 3 inch samples are adhered to a stainless steel panel by means of a rubber roller. The test consists of measuring the force necessary to strip or delaminate the adhesive test sample at a 178° angle from a stainless steel panel at a rate of pull of 12 inches per minute. A tensile tester is used to provide the pulling force. Thus, the force necessary to effect delamination is recorded in ounces as the peel force. Again, the samples were tested under the conditions indicated in the tables.

| **Polymer** | **XL** | **(Shear) 4 psi 176°F (min.,hr.)** | **(Shear) 2 psi 350°F** | **(Peel) 20 minP (oz/in)** | **(Peel) 24 hrP (oz/in)** | **(Shear) 4 psi Rm (hr)** | **(Shear) 150°F 4 psi (min,hr)** |
|---|---|---|---|---|---|---|---|
| A | MA | ---- | ---- | 59 | 78 | 1.6 | 1 min. |
| | Al | 9 min. | 2 min. | 50 | 60 | 77 | 52 min. |
| | MA+Al | 9 min. | 1 min. | 52 | 75 | 57 | 49 min. |
| B | MA | 4 min. | 0 min. | 46 | 8 | 11 | 4 min. |
| | Al | 163+ hr. | 58 hr. | 25 | 10 | 190+ | 140+ hr. |
| | MA+Al | 163+ hr. | 58 hr. | 53 | 35 | 128+ | 77+ hr. |
| C | MA | 160+ hr. | 6 hr. | 34 | -- | 100+ | 57 min. |
| | Al | 160+ hr. | 8 hr. | 52 | 43 | 190+ | 120+ hr. |
| | MA+Al | 160+ hr. | 35 hr. | 39 | 44 | 128+ | 120+ hr. |

The results presented above show that the adhesive formulated with Polymer A and containing no acetal monomer gave low shear values, particularly at higher temperatures. Addition of the acetal monomer (Polymer B) and the acetal monomer and hydroxyl moiety (Polymer C) substantially increased the shear values without appreciable reduction in peel.

### EXAMPLE 2

### Preparation of PSA Polymer by Solution Polymerization

This example describes the preparation of vinyl/acrylic solution polymers (D, E, F) of a pressure sensitive adhesive containing octyl acrylate (2-ethylhexyl acrylate), vinyl acetate, acrylic acid, hydroxyethyl acrylate (HEA), and N-(2,2-dimethoxy-1-hydroxy)ethyl acrylamide (DMHEA).

### A. Solution Polymer

### 1. Equipment

A one liter, four neck round bottom flask equipped with a stainless steel stirrer, condenser, and a thermometer was used for polymerization. Means for heating (hot water bath) and cooling were provided.

### 2. Material Charges

| | **GRAMS** | | |
|---|---|---|---|
| | **D** | **E** | **F** |
| **MONOMER MIX** | | | |
| Octyl Acrylate | 146.0 | 146.0 | 146.0 |
| Acrylic Acid | 14.0 | 14.0 | 14.0 |
| DMHEA (93.0%) | 0 | 10.8 | 10.8 |
| HEA | 0 | 0 | 6.6 |

| **INITIAL CHARGE** | | | |
|---|---|---|---|
| Monomer Mix | 20.0 | 20.0 | 20.0 |
| Vinyl Acetate | 40.0 | 40.0 | 40.0 |
| Ethyl Acetate | 80.0 | 80.0 | 80.0 |
| Vazo 64* | 0.1 | 0.1 | 0.1 |

| **SLOW ADDITION 1** | | | |
|---|---|---|---|
| Monomer Mix | 140.0 | 150.8 | 157.4 |

| **SLOW ADDITION 2** | | | |
|---|---|---|---|
| Ethyl Acetate | 70.0 | 70.0 | 70.0 |
| Vazo 64 | 0.5 | 0.5 | 0.5 |

| **SLOW ADDITION 3** | | | |
|---|---|---|---|
| t-amyl peroxypivilate (50.0%) | 3.0 | 3.0 | 3.0 |
| Heptane | 30.0 | 30.0 | 30.0 |

| **DILUTION** | | | |
|---|---|---|---|
| Isopropanol | 60.0 | 60.0 | 60.0 |

### 3. Procedure

The monomer mix was prepared first. The initial charge was added to the reactor, and it was heated to reflux (78.0°C). After refluxing for 10 minutes, the first slow addition was started over four hours, and slow addition 2 was started over 4-½ hours. When the second slow addition was complete, the contents of flask was held at reflux for two hours. Then the third slow addition was started over one hour. When it was complete, the contents were held under reflux for one hour and then cooled to 60.0°C and the diluent was added.

The resulting lacquers had the following properties.

| | **D** | **E** | **F** |
|---|---|---|---|
| **Percent Solids** | 45.8 | 45.3 | 46.1 |
| **Intrinsic Viscosity** | 0.530 | 0.406 | 0.519 |
| **Brookfield Viscosity** | 1960.0 | 2510.0 | 7950.0 |
| **Mn** | 27 881 | 21 830 | 24 047 |
| **Mw** | 341 983 | 348 149 | 621 800 |
| **d** | 12.3 | 15.9 | 25.9 |

The polymers were formulated and tested as described in Example 1.

| **POLYMER** | **XL** | **20 min. peel** | **24 hr. peel** | **4 psi, Tm** | **4 psi 150°F** |
|---|---|---|---|---|---|
| **D** | MA | 66 | 92 | 1.3 hr. | -1 min. |
| | Al | 58 | 80 | 133 hr. | 20 min. |
| | MA+Al | 64 | 77 | 52 hr. | 23 min. |
| **E** | MA | 70 | 97 | 7 hr. | 2 min. |
| | Al | 63 | 83 | 32 hr. | 151 min. |
| | MA+Al | 64 | 87 | 150+ hr. | 47 min. |
| **F** | MA | 69 | 89 | 21 hr. | 106 min. |
| | Al | 65 | 78 | 100+ hr. | 1400+ min. |
| | MA+Al | 64 | 86 | 100+ hr. | 1400+ min. |

Again, the results show that the acetal crosslink occurs without an appreciable drop in peel.

### EXAMPLE 3

Two compositions were synthesized as follows using the general procedure described in Example 2:

| | | |
|---|---|---|
| G | EHA/MA/AA | (65./27.5/7.5) |
| H | EHA/MA/AA/DMDPA/HEA | (65/27.5/7.5/5.0/2.9) |

where DMDPA = dimethoxy dimethyl propyl acrylate.

The polymers were formulated and tested as described in Example 1.
The results are as follows:

| **Polymer Formulation** | **XL** | **20 min. Peel** | **24 hr. Peel** | **4 psi** |
|---|---|---|---|---|
| **G** | MA + Al | 48 | 66 | 2 hr. |
| **H** | MA + Al | 59 | 74 | 10 hr. |
| **H** | MA | 74 | 86 | 7.3 hr. |

As the results show, the acetal and aluminum curing system gave higher shear than the aluminum only curing system to adhesives formulated with Polymer H. The acetal only curing system (G) gave shear comparable to the A1 only curing system but higher peel. (Although the adhesive containing polymer G was formulated with maleic anhydride, Polymer G itself contained no acetal functionality to crosslink with the maleic anhydride.)

Sample H was also formulated with a small amount of diphenyl iodonium iodide, coated and UV irradiated. The onium salt liberates strong acids, hydrogen iodide in this case, under UV irradiation. This acid catalyzes the acetal crosslinking at room temperature. The following table shows the results:

| **Polymer** | **UV** | **20 min. Peel** | **24 hr. Peel** | **4 psi** |
|---|---|---|---|---|
| **H** | 0 min. | 70 | 72 | 6 hr. |
| | 4 min. | 64 | 86 | 13 hr. |

As can be seen, exposure to ultraviolet cure also gave significant cure rates.

### EXAMPLE 4

The following example describes the preparation of a pressure sensitive adhesive containing N-butoxymethyl acrylamide and having the following composition; 50(2-EHA)/35 MA/10 BA/5 AA/ 1.2 NBMA.

The adhesive was prepared using the general method described in Example 2. The material changes and lacquer properties are shown below.

| **Monomer Mix** | I | | J | | K | |
|---|---|---|---|---|---|---|
| | PPHM | Wt gms | PPHM | Wt gms | PPHM | Wt gms |
| 2 Ethyl hexyl Acrylate | 50 | 400 | 50 | 400 | 50 | 400 |
| Methyl Acrylate | 35 | 280 | 35 | 280 | 35 | 280 |
| Butyl Acrylate | 10 | 80 | 10 | 80 | 10 | 80 |
| Acrylic Acid | 5 | 40 | 5 | 40 | 5 | 40 |
| N-Butoxymethyl Acrylamide | 0.4 | 3.2 | 0.8 | 6.4 | 1.2 | 9.6 |

| **Initial Charge** | | | | | | |
|---|---|---|---|---|---|---|
| Monomer Mix | 10 | 80.3 | 10 | 80.64 | 10 | 80.96 |
| 2 Propanol | 5 | 40 | 5 | 40 | 5 | 40 |
| Ethyl Acetate | 15.85 | 126.8 | 15.85 | 126.8 | 15.85 | 126.8 |
| VAZO-67 | 0.08 | 0.64 | 0.08 | 0.64 | 0.08 | 0.64 |

| **Monomer slow Add #1** | | | | | | |
|---|---|---|---|---|---|---|
| Monomer Mix | | 722.9 | | 725.8 | | 728.64 |

| **Initiator Slow Add #2** | | | | | | |
|---|---|---|---|---|---|---|
| Ethyl Acetate | 10 | 80 | 10 | 80 | 10 | 80 |
| VAZO-67 | 0.72 | 5.76 | 0.72 | 5.76 | 0.72 | 5.76 |

| **Scavenger Slow Add #3** | | | | | | |
|---|---|---|---|---|---|---|
| Ethyl Acetate | 2.5 | 20 | 2.5 | 20 | 2.5 | 20 |
| Lupersol 554 M-50 | 0.38 | 3.04 | 0.38 | 3.04 | 0.38 | 3.04 |
| Theoretical Solids % | | 75.14 | | 75.22 | | 75.4 |

| **Properties** | | | | | | |
|---|---|---|---|---|---|---|
| % Solids | 74.6 | | 74.6 | | 74.7 | |
| Residual Monomer 2EHA PPM | 484 | | 422 | | 471 | |
| Brookfield Viscosity Centipoise | 20,250 | | 23,350 | | 22,850 | |
| Iv Tolene | 0.218 | | 0.219 | | 0.221 | |
| Insoluble | 0 | | 0 | | 0 | |
| Mw | 83,400 | | 84,500 | | 85,200 | |
| Mn | 20,100 | | 20,000 | | 20,000 | |
| dispersity | 4.2 | | 4.3 | | 4.26 | |

An adhesive was formulated using the polymer designated K by diluting with an 80 ethyl acetate /20 isopropyl alcohol solvent blend to 65% solids, reducing the viscosity to 2,200 cps.

The result of the adhesives testing are shown below.

| **Evaluation:** | **Fresh coating 24 hrs/RT** | **Aged coating 1 week/158F 24 hrs/RT** |
|---|---|---|
| 20 min. peel adhesion, oz/in | 56 | 50 |
| 4 psi shear hold, hrs @ 72F | 32 | 60 |
| hrs @ 150F | 200+ | 1.2 |
| 2 psi sheer hold, hrs @ 150F | --- | 200+ |

The results, which represent an average of three readings, show superior adhesive and cohesive properties in both the fresh and cured samples at 2 psi coating weights. The results do, however, indicate that at higher coatings weights (i.e. 4 psi) in the case of polymers formulated with N-butoxymethyl acrylamide, there is a reduction in tack after aging which is believed to be caused by crosslinking occurring during the aging of elevated temperature.

## Claims

1. A pressure sensitive adhesive composition prepared from a substantially water-free, organic solvent solution of an interpolymer, the interpolymer comprising:
i) at least about 80% by weight of at least one alkyl ester of acrylic or methacrylic acid containing 2 to 18 carbon atoms in the alkyl group; or a vinyl ester of an C₂-C₁₀ alkanoic acid or combination thereof;
ii) 1 to 20% by weight of an ethylenically unsaturated monomer of the general formula: 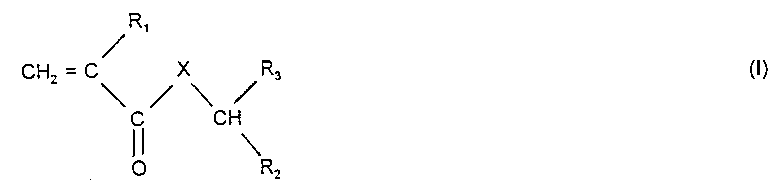 where R₁ is H or CH₃ with the proviso that (a) when X is NH and R₂ is H, R₃ is 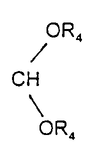 or O-R₅ ;
(b) when X is NH and R₂ is OH; R₃ is 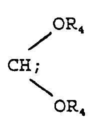 and
(c) when X is O, R₂ is H and R₃ is 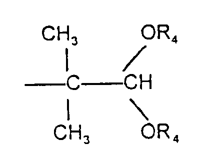 where in (a), (b) and (c), R₄ is C₁-C₄ alkyl or (CH₂)ₙ and n is 2-4 and R₅ is H or C₁-C₄ alkyl; and
iii) 0 to 10% by weight of a hydroxyl containing monomer.

2. The pressure sensitive adhesive of Claim 1 wherein the alkyl acrylate in the interpolymer is an acrylic acid ester of an alcohol having up to about 18 carbon atoms.

3. The pressure sensitive adhesive of Claim 1 wherein the vinyl ester is selected from the group consisting of vinyl acetate, vinyl propionate and vinyl butyrate.

4. The pressure sensitive adhesive of Claim 1 wherein the ethylenically unsaturated monomer is N-(2,2-dimethoxy-1-hydroxy) ethyl acrylamide.

5. The pressure sensitive adhesive of Claim 1 wherein the interpolymer contains 0.5 to 10% of the hydroxyl containing monomer selected from the group consisting of hydroxy alkyl esters, esters of acrylic acid, methacrylic acid, and other alpha-beta ethylenically unsaturated carboxylic acids.

6. The pressure sensitive adhesive of Claim 1 wherein the interpolymer contains 0.5 to 10% of a mono- or di-esters of unsaturated dicarboxylic acids such as maleic acid, fumaric acids, and itaconic acid in which at least one of the esterifying groups contains a hydroxyl group.

7. The pressure sensitive adhesive of Claim 1 further comprising a crosslinking agent selected from the group consisting of metal alkoxides and chelating metal esters.

8. The pressure sensitive adhesive of Claim 1 wherein the solvent is selected from the group consisting of ethanol, propanol, isopropanol, butanol, methyl Cellosolve, butyl Cellosolve, and diacetone alcohol.

9. The pressure sensitive adhesive of Claim 1 further comprising an organic soluble Lewis acid or Bronsted acid catalyst.

10. The pressure sensitive adhesive of Claim 1 further comprising diphenyl iodonium iodide.
